# EUROPEAN PATENT SPECIFICATION

(11) **EP 4 353 063 B1**
(45) Date of publication and mention of the grant of the patent: **03.06.2026**
(21) Application number: 23203652.5
(22) Date of filing: 13.10.2023
(51) Int. Cl.: A01B 79/00, A01D 41/127, A01D 41/14, A01D 45/00, A01D 45/02, G06V 10/44, G06V 20/10

(54) **SYSTEMS AND METHODS FOR DETECTING CROP LOSSES IN A CORN HEADER**
SYSTEME UND VERFAHREN ZUR ERKENNUNG VON ERNTEVERLUSTEN IN EINEM MAISPFLÜCKER
SYSTÈMES ET PROCÉDÉS DE DÉTECTION DE PERTES DE CULTURE DANS UN CUEILLEUR DE MAÏS

(30) Priority: 14.10.2022 US 202263416015 P
(43) Date of publication of application: 17.04.2024
(73) Proprietor: CNH Industrial America LLC, New Holland, PA 17557 (US)
(72) Inventor: HUNT, Cory Douglas, New Holland, 17557 (US); MARTIN, Jethro, New Holland, 17557 (US)
(74) Representative: CNH Industrial IP Department

(56) References cited:
- EP-A1- 3 284 334
- EP-A1- 3 994 973
- EP-A2- 3 008 990
- EP-B1- 3 141 102

## Description

### BACKGROUND

The present invention generally relates to detection of airborne particles associated with operation of an agricultural header, and more particularly, to adjusting one or more operating parameters of the agricultural header based on the detection of airborne particles.

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

A harvester may be used to harvest crops, such as barley, beans, beets, carrots, corn, cotton, flax, oats, potatoes, rye, soybeans, wheat, or other plant crops. The harvester may include or be coupled to a header, which may be designed to efficiently harvest certain types of crops. For example, a corn header may be designed to efficiently harvest corn. In particular, the corn header may include row units that include components that operate to separate ears of corn from stalks as the harvester travels through a field. Conveyors (e.g., augers) carry the ears of corn toward processing machinery and/or storage compartments of the harvester, while the stalks are deposited back into the field.

EP 3 994 973 A1 discloses, according to its abstract, a data processor and a user interface configured to provide a detected size of a harvestable plant component as an indicator of yield of standing crop in a field. EP 3 008 990 A2 discloses a method and apparatus for estimating yield by a first method measuring aggregate yield during a measurement interval and a second method based upon sensed power characteristics across a harvesting width of a harvesting machine. EP 3 284 334 A1 discloses a grain loss sensor array system, capturing infrared images or video of the ground using a thermal sensing device.

### SUMMARY

In one aspect of the present invention, a header for an agricultural system is provided as set forth in claim 1. The header for an agricultural system includes a plurality of row units distributed across a width of the header, one or more sensors coupled to the header and configured to generate respective signals indicative of a plurality of objects in an area proximate the header, and a controller comprising a memory and a processor. The one or more sensors are oriented such that a field of view of the one or more sensors comprises an area above the header relative to a soil surface, and the controller is configured to receive the respective signals from the one or more sensors coupled to the header and process the respective signals to determine an amount of butt-shelling occurring on the header. The controller is configured to process the respective signals by identifying one or more respective characteristics of the plurality of objects in the area proximate the header. A portion of the plurality of objects are filtered out based on the one or more respective characteristics of the plurality of objects. A number of airborne particles of a crop in the area proximate the header are determined by counting a remaining portion of the plurality of objects in the area proximate the header after filtering out the portion of the plurality of objects.

In another aspect of the present invention a method is provided as set forth in claim 12. The method includes operating an agricultural system to harvest crop from a field using a header, and receiving sensor data from one or more sensors mounted on the header, wherein the sensor data is indicative of a plurality of objects within a field of view of the one or more sensors, and wherein the one or more sensors are oriented airborne such that the header is not in the field of view of the one or more sensors. The method further includes determining a number of the plurality of objects that correspond to airborne kernels of a crop comprising filtering out at least one object of the plurality of objects based on a size of the at least one object, a speed of the at least one object, or both. The method further includes determining whether the number of the plurality of objects that correspond to the airborne kernels of the crop exceeds a threshold number, and generating an output in response to the number of the plurality of objects that correspond to the airborne kernels of the crop exceeding the threshold number.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a side view of an agricultural system, in accordance with an embodiment of the present disclosure;
FIG. 2 is a perspective side view of a header that may be employed within the agricultural system of FIG. 1, in accordance with an embodiment of the present disclosure;
FIG. 3 is a perspective front view of a portion of the header of FIG. 2, in accordance with an embodiment of the present disclosure;
FIG. 4 is a front view of a crop being directed through a portion of the header of FIG. 2, in accordance with an embodiment of the present disclosure;
FIG. 5 is a schematic diagram of a portion of the header of FIG. 2 with an airborne particle sensor system coupled thereto, in accordance with an embodiment of the present disclosure;
FIG. 6 is a schematic diagram of a portion of the header of FIG. 2, illustrating various sensors of the airborne particle sensor system of FIG. 5, in accordance with an embodiment of the present disclosure; and
FIG. 7 is a flowchart of a method for adjusting one or more operating parameters of a header, such as the header of FIG. 2, based on sensor data received from the airborne particle sensor system of FIG. 5, in accordance with an aspect of the present disclosure.

### DETAILED DESCRIPTION

One or more specific embodiments of the present disclosure will be described below. In an effort to provide a concise description of these embodiments, all features of an actual implementation may not be described in the specification.

The process of farming typically begins with planting seeds within a field. Over time, the seeds grow and eventually become harvestable crops. Typically, only a portion of each crop is commercially valuable, so each crop is harvested to separate the usable material from the remainder of the crop. For example, a harvester may include or be coupled to a header to harvest crops within the field. The header may be a corn header that is designed to efficiently harvest corn within the field. The corn header may include multiple row units across a width of the corn header, and each row unit may include deck plates, stalk rollers, and/or other components that operate to separate ears of corn from stalks as the harvester travels through the field. Conveyors (e.g., augers) carry the ears of corn toward processing machinery and/or storage compartments of the harvester, while the stalks are deposited back into the field.

It is presently recognized that as crops impact the header or components thereof (e.g., deck plate), particles (e.g., individual kernels) from the crop may be directed into the air and away from the header (e.g., as a result of the impact with the header components) such that those particles are lost before being directed toward the processing machinery and/or storage compartments of the harvester, thereby reducing the yield from a harvesting operation. As discussed herein, "butt-shelling" may refer to the process of individual kernels of a crop being directed into the air (e.g., airborne) via engagement of the crop with one or more components of the header (e.g., deck plates, stalk rollers). Accordingly, it may be desirable to employ one or more sensors to detect the presence of airborne particles proximate the header, such that adjustments may be made to one or more operating parameters of the header to reduce an amount of product lost due to impact with components of the header (e.g., reduce an amount of butt-shelling, reduce a rate of butt-shelling), thereby increasing the yield in a harvesting operation.

Accordingly, present embodiments relate generally to an airborne particle sensor system. The airborne particle sensor system may include one or more sensors (e.g., radar sensors, motion sensors, vibration sensors, and the like) positioned on the header and/or proximate the header, and the one or more sensors may be configured to generate signals (e.g., data) indicative of one or more airborne particles within a threshold distance of the header during a harvesting operation. For example, the one or more sensors may be oriented such that an area above the header relative to gravity and/or relative to the ground is monitored for airborne particles. As the one or more sensors generate the data indicative of a number of airborne particles in the area proximate the header (e.g., indicative of an amount of butt-shelling), the data may be analyzed to determine whether the number of airborne particles in the area proximate the header is above a threshold value (e.g., over a first time period during the harvesting operation). Upon determining that the number of airborne particles in the area proximate the header is above the threshold value, the airborne particle sensor system may send a control signal to adjust one or more operating parameters of the header, thereby reducing an amount of airborne particles in the air (e.g., over a second time period during the harvesting operation). For example, the airborne particle sensor system may send a control signal to decrease a size of a gap between a pair of deck plates, thereby reducing an amount of airborne particles. Similarly, the airborne particle sensor system may send a control signal to reduce the speed at which the stalk rollers feed plant stalks through the header, which may also serve to reduce an amount of airborne particles. In this way, a number of airborne particles lost as a result of butt-shelling may be reduced, thereby increasing yield and efficiency in a harvesting operation.

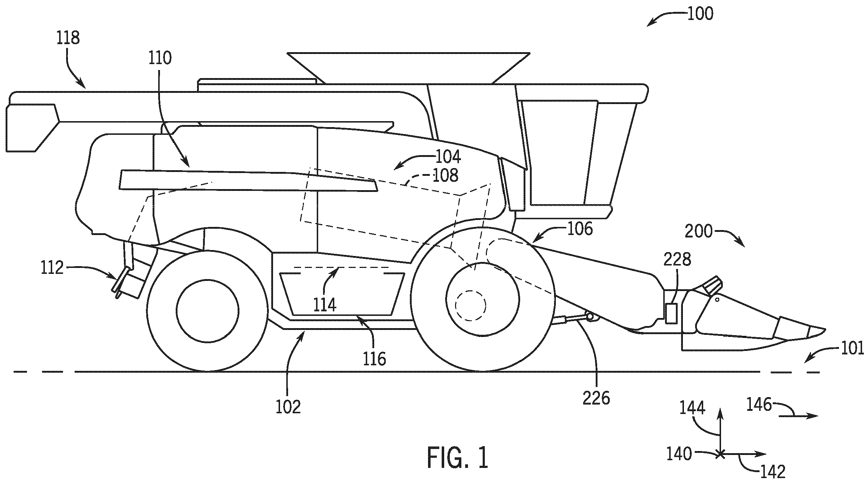

With the foregoing in mind, FIG. 1 is a side view of an embodiment of an agricultural system 100, which may be a harvester. The agricultural system 100 includes a chassis 102 configured to support a header 200 (e.g., a corn header) and an agricultural crop processing system 104. The header 200 is configured to separate a portion of the crops (e.g., ears of corn) from stalks and to transport the portion of the crops toward an inlet 106 of the agricultural crop processing system 104 for further processing of the portion of the crops. The header 200 may also return other portions of the crops (e.g., material other than grain [MOG], such as stalks) to a field.

The agricultural crop processing system 104 receives the portion of the crops from the header 200 and separates desired crop material from crop residue. For example, the agricultural crop processing system 104 may include a thresher 108 having a cylindrical threshing rotor that transports the crops in a helical flow path through the agricultural system 100. In addition to transporting the crops, the thresher 108 may separate certain desired crop material (e.g., grain) from the crop residue, such as husks and pods, and may enable the desired crop material to flow into a cleaning system 114 (such as sieves) located beneath the thresher 108. The cleaning system 114 may remove debris from the desired crop material and transport the desired crop material to a storage tank 116 within the agricultural system 100. When the storage tank 116 is full, a tractor with a trailer may pull alongside the agricultural system 100. The desired crop material collected in the storage tank 116 may be carried up by an elevator and dumped out of an unloader 118 into the trailer. The crop residue may be transported from the thresher 108 to a crop residue handling system 110, which may process (e.g., chop/shred) and remove the crop residue from the agricultural system 100 via a crop residue spreading system 112 positioned at an aft end of the agricultural system 100. To facilitate discussion, the header 200 may be described with reference to a lateral axis or direction 140, a longitudinal axis or direction 142, and a vertical axis or direction 144. The agricultural system 100 and/or its components may also be described with reference to a direction of travel 146.

In the illustrated embodiment, the agricultural system 100 may include one or more actuators configured to manipulate the spatial orientation and/or position of the header 200 with respect to the agricultural system chassis 102, and/or the spatial orientation of the header 200 with respect to the crop rows/ground/soil. For example, a header height actuator 226 may drive the header 200 to move along the direction 144 relative to a ground surface 101. The header 200 may be attached to the chassis 102 via a four bar linkage. The position of the four bar linkage may be manipulated by the header height actuator 226 to adjust the height of the header 200. The agricultural system 100 may also include a header orientation actuator 228. The header orientation actuator 228 may be configured to rotate the angular orientation of the header 200 (e.g., the entire header 200 or a portion thereof) relative to the ground surface 101. The actuators 226, 228 may be manipulated in response to one or more stimuli to adjust the agricultural system 100 based on one or more environmental variables (e.g., soil condition, terrain, crop damage). As discussed herein, an airborne particle sensor system may include one or more sensors (e.g., motion sensors, radar sensors, vibration sensors) on the header 200, and the airborne particle sensor system may receive and process signals generated by the one or more sensors to determine a number of airborne particles in the air proximate the header 200. In some embodiments, one or more operating parameters of the header 200 may be adjusted based on the number of airborne particles detected by the airborne particle sensor system, as described in greater detail herein.

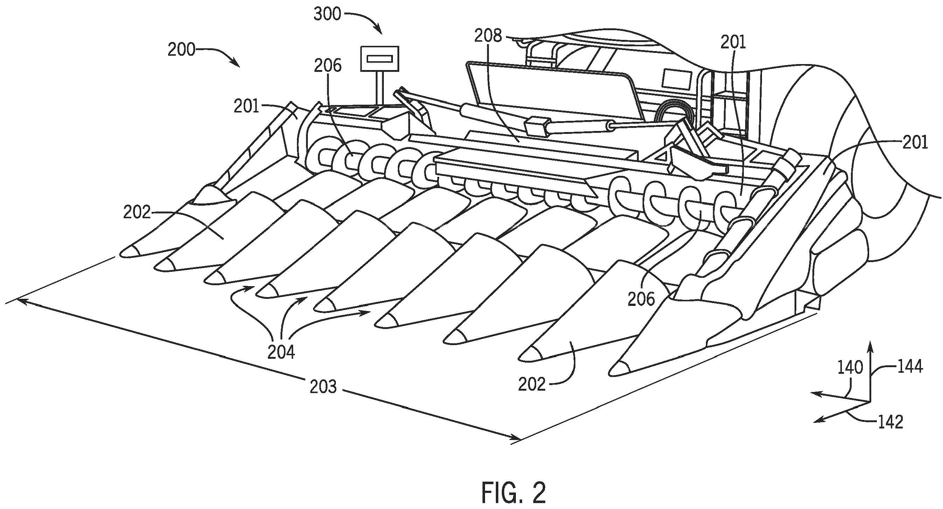

FIG. 2 is a perspective view of an embodiment of the header 200 that may be employed within the agricultural system 100 of FIG. 1. In the illustrated embodiment, the header 200 is a corn header and is supported by a frame 201, which may be coupled to the chassis 102. The header 200 includes multiple dividers 202 configured to divide rows of a crop (e.g., corn). The dividers 202 may be distributed across a width 203 of the header 200 (e.g., along the lateral axis 140). As the header 200 moves along a path, the dividers 202 may direct the crops from each row to one or more row units 204. The row units 204 are configured to separate a portion of each crop (e.g., an ear of corn) from a stalk, thereby separating the portion of each crop from the soil. The portion of the crop may be directed to one of a pair of conveyors 206 (e.g., augers) configured to convey the portion of the crop laterally inward along the lateral axis 140 to a center crop conveyor 208 at a center of the header 200, and the center crop conveyor 208 directs the portion of the crop toward the inlet of the agricultural crop processing system 104. As illustrated, the conveyors 206 extend along a substantial portion of the width 203 of the header 200 (e.g., along the lateral axis 140). The conveyors 206 may be driven by a drive mechanism (e.g., electric motor, hydraulic motor). The row units 204 may also chop and/or return other portions of the crops (e.g., MOG, such as stalks) to the field.

The header 200 may also include a sensor system coupled to a portion of the header 200 (e.g., the frame 201). For example, an airborne particle sensor system 300 (APSS) may be mounted to a portion of the frame 201 and may include one or more sensors configured to generate data associated with one or more airborne particles (e.g., high density particles, kernels) that are dislodged from a respective crop and directed into the air proximate the header 200. In certain embodiments, the one or more sensors of the APSS 300 may include radar sensors, motion sensors, camera sensors, and/or any other suitable type of sensors, and may be oriented and/or angled in a direction along the longitudinal axis 142 (e.g., parallel to the ground surface 101), angled away from the ground surface 101 in a direction between the longitudinal axis 142 and the vertical axis 144, or a combination thereof. That is, in some embodiments, the one or more sensors of the APSS 300 may be directed away from the dividers 202 and toward an area above the dividers 202, above the ground surface 201, and/or above other components of the header 200 relative to the vertical axis 144. In this way, as airborne particles are directed off of the header 200 and into the air, the one or more sensors of the APSS 300 may detect the presence of the airborne particles, and an appropriate output to limit the number of airborne particles in the air may be generated. For example, the APSS 300 may be communicatively coupled to a controller (e.g., electronic controller) that receives and processes the signals indicative of the airborne particles to determine whether a number of airborne particles in the air (e.g., in an area proximate the header 200) exceeds a threshold number of particles over a period of time (e.g., greater than 100 kernels detected over 10 minute span). In response to determining that the number of airborne particles exceeds the threshold, the controller may generate an appropriate output to reduce a number of particles in the air as harvesting operations continue, as described in greater detail herein.

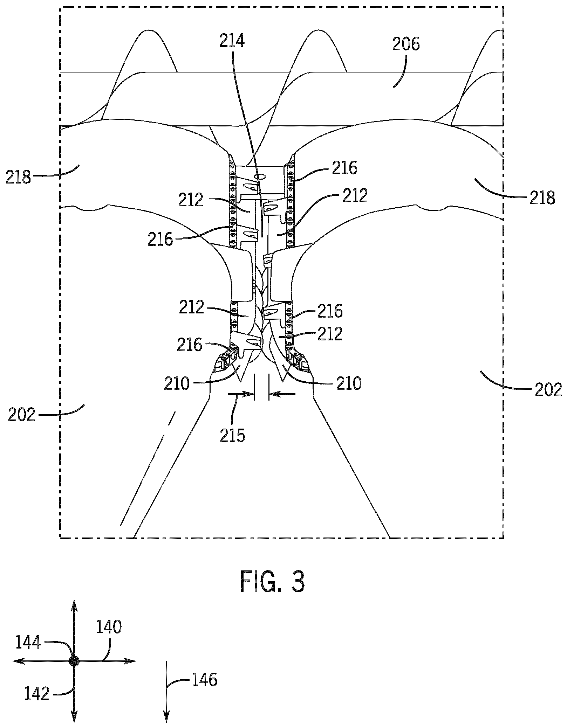

FIG. 3 is a perspective view of an embodiment of a portion of the header 200. As shown, the portion of the header 200 includes the multiple dividers 202 that direct the crops to one or more row units 204. Each row unit 204 includes various components that operate to separate a portion of the crop (e.g., ear of corn; desirable crop material) from the stalk, carry the portion of the crop (e.g., ear of corn; desirable crop material) toward the conveyors 206, and return the stalk to the field. For example, each row unit 204 may include a pair of stalk rollers 210 that are configured to grip the stalks and rotate in opposite directions to push the stalks in a direction toward the field (e.g., vertically downward direction along the vertical axis 144; below the header 200). The stalk rollers 210 may be configured to operate (e.g., rotate) at a particular speed to direct the stalks towards the field. In some embodiments, the speed at which the stalk rollers 210 rotate may be adjusted (e.g., via an actuator) based on data received from the APSS 300, as described in greater detail herein.

Each row unit 204 also includes a pair of deck plates 212 that are positioned over (e.g., above) the pair of stalk rollers 210 relative to the vertical axis 144. Each deck plate 212 extends from a first end to a second end along the longitudinal axis 142, and the pair of deck plates 212 are separated from one another along the lateral axis 140 to define a gap 214. Further, each row unit 204 may include a pair of chains 216 (e.g., with lugs) that are configured to drive or push the portion of the crop (e.g., ear of corn; desirable crop material) along the pair of deck plates 212 toward the conveyor(s) 206. The pair of deck plates 212 are spaced apart so that a width 215 of the gap 214 is sized to enable the stalks to be pulled through the gap 214, but to block the portion of the crop (e.g., ears of corn; desirable crop material) from falling through the gap 214. In some embodiments, the pair of deck plates 212 are adjustable and may be driven (e.g., via an actuator) toward and away from one another along the lateral axis 140 to change the width 215 of the gap 214, as described in greater detail herein. A hood 218 is positioned rearward of each divider 202 relative to the direction of travel 146 and between adjacent row units 204 to cover various components, such as the actuator that drives the pair of deck plates 212, linkages, and so forth.

As noted herein, for good harvesting performance, the portion of the crop (e.g., ear of corn; desirable crop material) should make initial contact with the pair deck plates 212 toward a forward portion of the pair of deck plates 212 relative to the longitudinal axis 142 or the forward direction of travel 146 of the header 200. This may enable the portion of the crop to separate from its stalk such that the stalks can be completely discharged from the header 200 before reaching a rear portion of the pair of deck plates 212, thereby reducing a likelihood of the stalks being fed into the conveyors 206. Additionally, the width 215 of the gap 214 should be sized such that the stalks of the crop may pass through the gap 214 while the portion of the crop (e.g., ear of corn; desirable crop material) is prevented or blocked from passing through the gap 214. For example, if the width 215 of the gap 214 is too large, both the stalk and the portion of the crop may pass through the gap 214 and may be discharged from the header 200 before being directed to the conveyor 206, thereby resulting in product loss (e.g., loss of the desirable crop material). In other cases, the width 215 of the gap 214 may be sized such that butt-shelling occurs. For example, as noted herein, butt-shelling may refer to individual kernels or particles of a crop being dislodged from the crop as the crop strikes or engages with the pair of deck plates 212. The butt-shelling may be a result of, and/or may be affected by, a velocity at which the crop strikes the pair of deck plates 212. However, in some cases, butt-shelling may occur when the width 215 of the gap 214 is sized such that only a portion of the desirable crop material may pass through the gap 214 without interference, while different portions of the desirable crop material engage with the pair of deck plates 212. Thus, a variety of operational and/or structural factors, such as a ground speed of the header, a rotational rate of the pair of stalk rollers 210, and/or the width 215 of the gap 214 between the pair of deck plates 212 (e.g., relative to a size of the portion of the crop), may cause butt-shelling and/or affect a rate of butt-shelling.

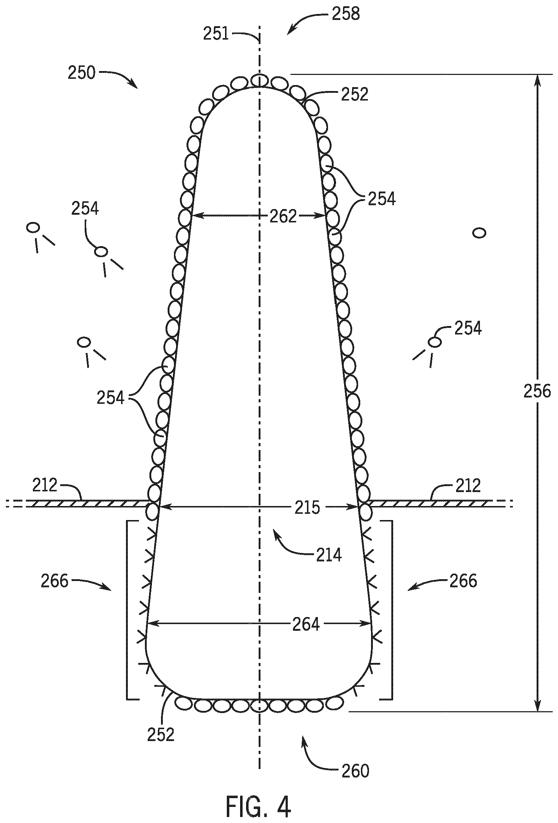

For example, FIG. 4 shows an example of a portion of a crop 250 (e.g., corn cob, ear of corn, desirable crop material) having a core 252 and a plurality of kernels 254 extending radially outward from the core 252 relative to a central axis 251 of the portion of the crop 250. The portion of the crop 250 may not be uniform in shape and thus may have a plurality of different diameters along a length 256 of the portion of the crop 250. For example, in some embodiments, the portion of the crop 250 may have a conical shape. Generally, the diameter of the portion of the crop 250 may progressively increase from an apex 258 of the portion of the crop 250 to a base 260 of the portion of the crop 250. For example, the portion of the crop 250 may have a first diameter 262 at or near the apex 258 of the portion of the crop 250 and a second diameter 264 at or near the base 260 of the portion of the crop 250. As illustrated, the second diameter 264 is greater than the first diameter 262. Further, the first diameter 262 may be less than the width 215 of the gap 214 such that the core 252 and the kernels 254 of the portion of the crop 250 near the apex 258 are able to pass through the gap 214, while the second diameter 264 of the portion of the crop 250 near the base 260 may be greater than the width 215 of the gap 214 such that the core 252 may pass through the gap 214 while the kernels 254 are limited or blocked from passing through the gap 214 by the pair of deck plates 212 (e.g., engage with the deck plates 212). As the stalk rollers 210 direct the stalk and the crop 250 towards the pair of deck plates 212, one or more lateral sides of the portion of the crop 250 may strike one or both of the deck plates 212 and one or more kernels 254 may be dislodged (e.g., sheared) from the core 252 due to engagement of the kernels 254 with one and/or both of the deck plates 212. In turn, the kernels 254 dislodged from the core 252 may be directed into the air, thereby resulting in one or more bare sections 266 on the portion of the crop 250, which may be undesirable. Indeed, as kernels 254 are dislodged from the portion of the crop 250, the kernels 254 may be directed into the air with a sufficient velocity that enables the kernels 254 to escape (e.g., not be caught) by the header 200, thereby resulting in yield loss.

Returning to FIG. 3, if the width 215 of the gap 214 is too small, the stalk may be prevented from passing through the gap 214, and thus the stalk may also be directed toward the conveyor 206, which may be undesirable. Accordingly, the width 215 of the gap 214 may be adjusted such that the stalk may pass through the gap 214, the portion of the crop may be blocked from passing through the gap 214, and an amount of butt-shelling may be limited (e.g., controlled, reduced), as described in greater detail herein. Another factor for good harvesting performance is the speed at which the pair of stalk rollers 210 direct the stalk and the portion of the crop towards the pair of deck plates 212. For example, if the speed of the pair of stalk rollers 210 is too high (e.g., too fast), the impact force from the portion of the crop striking the pair of deck plates 212 as the stalk is directed through the gap 214 may be sufficient to cause kernels to dislodge from the portion of the crop (e.g., butt-shelling). However, if the speed of the pair of stalk rollers 210 is too low (e.g., too slow), reduced efficiency associated with harvesting a field may occur, thereby resulting in increased costs (e.g., more gas, more time for operators to harvest a field) associated with harvesting (e.g., fuel costs increase as equipment is running for longer amount of time, an amount of time that a farmer spends on a harvester may be increased, thereby resulting in less time to perform other harvesting operations). Accordingly, it may be desirable to operate the pair of stalk rollers 210 at a target speed (e.g., speed or speed range) that limits an amount of butt-shelling, while still enabling an operator to efficiently perform a harvesting operation.

As noted herein, the header 200 may include an airborne particle sensor system (e.g., APSS 300) having one or more sensors mounted on (e.g., coupled to) the header 200, and the airborne particle sensor system may receive and process signals generated by the one or more sensors to identify a number of airborne particles (e.g., kernels) in one or more regions proximate the header 200. The airborne particle sensor system may include a controller (e.g., electronic controller) that receives and processes the signals, filters out unwanted objects and/or noise, identifies a number of airborne particles in the air, and then generates an appropriate output. In some embodiments, the appropriate output may include control signals, such as control signals to the actuators to adjust the position and/or the spatial orientation of the header 200, adjust a size of the gap 214, and/or adjust a rotation rate of the pair of stalk rollers 210. For example, in response to determining that a number of airborne particles in the air corresponding to pieces of a crop (e.g., kernels) exceeds a threshold number of particles, the controller may send a control signal to reduce the rotation rate of the pair of stalk rollers 210 and/or adjust the width 215 of the gap 214, thereby resulting in a reduced number of airborne particles. In some embodiments, the appropriate output may include providing a control signal to reduce a ground speed of the header 200. In some embodiments, the appropriate output may include a visual alarm (e.g., presented via a display screen in a cab of the agricultural system; text message with an explanation and/or a recommended adjustment to the width 215 of the gap 214 and/or adjustment to the rotation rate of the stalk rollers 210) and/or an audible alarm (e.g., presented via a speaker in the cab of the agricultural system).

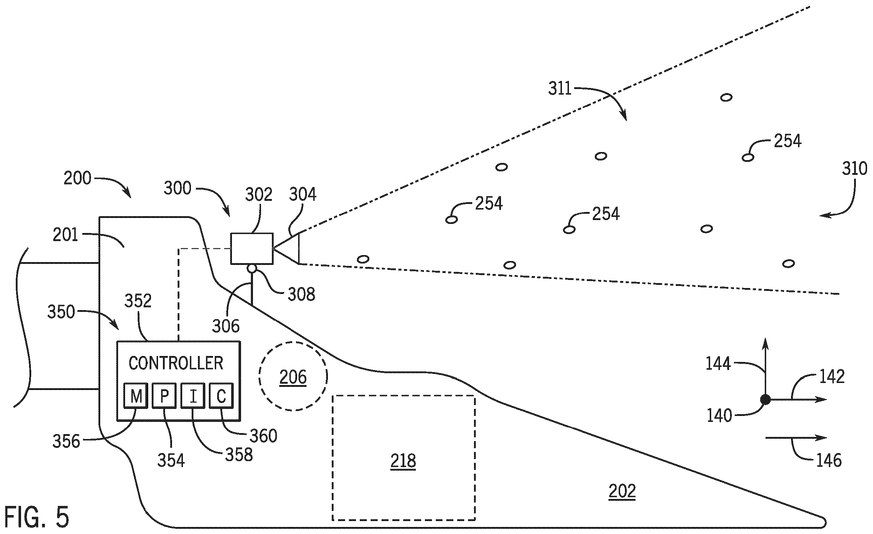

FIG. 5 is a schematic diagram of an embodiment of a portion of the header 200 with the airborne particle sensor system 300 (APSS 300) mounted thereto. The APSS 300 may include a housing 302 configured to house one or more sensors 304, and the housing 302 may be mounted to a portion of the frame 201 of the header via an arm 306 (e.g., telescoping arm; adjustable arm). However, it should be appreciated that the housing 302 with the one or more sensors 304 may be coupled to another portion of the agricultural system, such as a portion of the chassis supported over wheels or tracks (e.g., above a cab that supports an operator). In some embodiments, the arm 306 may be coupled to the APSS 300 via one or more joints 308. As noted above, the one or more sensors 304 may be radar sensors configured to detect high-density, airborne particles in an area proximate the header 200. For example, the one or more sensors 304 may be oriented parallel to the lateral axis 140 and/or the longitudinal axis 142 (e.g., parallel relative to the ground surface 101 such that the one or more sensors 304 capture data associated with airborne particles in an area 310 above the header 200 and/or the dividers 202 relative to the vertical axis 144. That is, in some embodiments, the one or more sensors 304 may be oriented in a direction (e.g., horizontal direction) parallel to the ground surface 101 such that a field of view 311 of the one or more sensors is above the header 200. Further, in certain embodiments, the one or more sensors 304 may be oriented in an upward direction away from the dividers 202 and the ground surface 101 at an angle relative to the longitudinal axis 142. In this way, the one or more sensors 304 may capture data indicative of airborne particles in the area 310 above the header 200 (e.g., in the field of view 311 of the one or more sensors 304).

In certain embodiments, the position and/or orientation of the APSS 300 and the one or more sensors 304 may be adjusted via the arm 306 and the one or more joints 308. For example, the arm 306 may be configured to translate along the vertical axis 144 such that a position (e.g., height) of the APSS 300 and the one or more sensors 304 relative to the vertical axis 144 may be adjusted, and thus, a field of view of the one or more sensors 304 relative to the header 200 may be adjusted (e.g., to enable the one or more sensors to detect the airborne particles over a different area or zone relative to the header 200). Further, the one or more joints 308 may be configured to enable the APSS 300 and the one or more sensors 304 to rotate about one or more axes such that an angle of the one or more sensors 304 relative to the header 200 may be adjusted and/or a field of view of the one or more sensors 304 relative to the header 200 may be adjusted. For example, the joint(s) 308 may enable the APSS 300 to rotate about the vertical axis 144 to change a field of view of the one or more sensors 304 across the width of the header 200. In certain embodiments, the joint(s) 308 may additionally or alternatively enable the APSS 300 to rotate about the lateral axis 140 to change a field of view of the one or more sensors 304. In this way, the area 310 monitored by the APSS 300 may be adjusted, as described in greater detail herein. It should be noted that while only one sensor 304 is illustrated, the APSS 300 may include any number of sensors 304 (e.g., two, three, four, five, or more) housed in respective housings 302 and capable of capturing data indicative of airborne particles in the area 310 proximate the header 200.

As noted above, the APSS 300 may be communicatively coupled to a control system 350 configured to control operation of at least portions of the agricultural system 100 (e.g., control one or more components of the header 200) based on data received from the one or more sensors 304 of the APSS 300. The control system 350 may include a controller 352 having one or more processors 354, a memory 356, , and communication circuitry 360 configured to communicate with the one or more sensors 304, the arm 306, the joints 308, the pair of deck plates 212, the pair of stalk rollers 210, and/or other components of the header 200. The controller 352 may communicate with the one or more sensors 304 and/or other components of the header 200 over any suitable wired or wireless (e.g., radio or light based) network that may facilitate communication of data between systems, devices, and/or equipment. In some embodiments, the network may be a Wi-Fi network, a light detection and ranging (LIDAR) network, a 4G network, a 4G LTE network, a 5G network, a Bluetooth network, a Near Field Communication (NFC) network, or any suitable network for communicating information between devices.

In some embodiments, the controller 352 may include or be configured to communicate with an output device, such as a display screen in a cab of the agricultural system and/or a speaker in the cab of the agricultural system. This may enable the controller 352 to provide the visual and/or audible alarms based on the signals from the one or more sensors 304. It should be appreciated that the output device may also operate an input device (e.g., touchscreen) that enables the operator to provide inputs to the controller 352 (e.g., to set and/or to adjust the threshold that represents undesirable butt-shelling/triggers adjustments to the header 200). In some embodiments, the controller 352 may be configured to communicate with a portable computing device, which may be a portable handheld device used by an operator to facilitate operation of the agricultural system 100. In certain embodiments, the portable computing device includes a smart phone, a tablet computer, a laptop computer, or another portable computer having a user interface (e.g., an electronic display with a graphical user interface). For example, the controller 352 may send instructions to provide the visual and/or audible alarms and/or notifications to the personal computing device based on the signals generated by the one or more sensors 304. In some embodiments, the controller 352 may be configured to receive inputs and/or instructions from the output device and/or portable computing device, such as inputs and/or instructions to adjust one or more operating parameters of the header 200. For example, an operator may view information derived from the signals from the one or more sensors 304 (e.g., a number of particles or some indication of this, such as a notification that the number of particles in the area 310 above the header 200 exceeds a threshold number), and the operator may provide an input that instructs and/or approves the controller 352 to adjust one or more of the operating parameters of the header 200, as described in greater detail herein. It should be appreciated that the process of monitoring the particles and controlling the one or more operation parameters of the header 200 may be automated and carried out without operator input (e.g., the display screen may present the information for visualization by the operator, but the controller 352 proceeds to adjust the one or more operating parameters of the header 200 without the input from the operator). As the header 200 harvests crops, the controller 352 may be configured to receive sensor feedback from the one or more sensors 304 indicative of a number of airborne particles in the area 310 proximate the header 200 to identify when a number of airborne particles exceeds the threshold, such that adjustments may be made to the operating parameters of the header 200.

In some embodiments, the controller 352 may include one or more machine learning or artificial intelligence models having software configured to process and analyze the data generated by the one or more sensors 304 of the APSS 300. Using the machine learning models, artificial intelligence, modeled data, historical data, and/or empirical data, the controller 352 may determine that certain operating parameters (e.g., certain width 215 of the gap 214 and/or certain speed of the pair of stalk rollers 210) are associated with increased amounts of butt-shelling. Accordingly, the controller 352 may determine to avoid such operating parameters, thereby reducing an amount of butt-shelling that may occur during operation of the header 200. Similarly, the controller 352 may determine that certain other operating parameters (e.g., other width 215 of the gap 214 and/or certain other speed of the pair of stalk rollers 210) are associated with decreased amounts of butt-shelling. The butt-shelling may also be affected by the ground speed and/or characteristics of the crop (e.g., the width of the desirable crop material), and thus, the controller 352 (and the algorithms utilized by the controller) may take multiple factors into consideration to make the adjustment(s) as the header 200 travels through the field to carry out harvesting operations. It should be noted that in some embodiments, the control system 350 may be located remotely from the APSS 300, and the one or more sensors 304 may be configured to communicate data in real-time to the control system 350 across any suitable network.

In certain embodiments, the controller 352 may also be configured to filter out or screen data that is not indicative of airborne kernels directed off of the pair of deck plates 212 and into the area 310 proximate the header 200. For example, the one or more sensors 304 may be one or more radar sensors configured to detect a distance, velocity, and/or direction of travel of an object within the field of view of the one or more sensors 304. During operation, the agricultural system 100, and thus the header 200, may traverse a field to harvest the crop at a particular speed (e.g., 5 kilometers per hour). Accordingly, the APSS 300 (via the controller 352) may filter out any objects detected by the one or more sensors 304 that are moving through the field of view of the one or more sensors 304 at a speed that has less than a threshold deviation (e.g., less than 2 kilometers per hour of deviation) from the ground speed of the agricultural system 100. For example, if the agricultural system 100 is moving at 5 kilometers per hour, the controller 352 may filter out any objects detected by the one or more sensors 304 that are determined to be moving through the field of view of the one or more sensors 304 at a speed between 3 and 7 kilometers per hour, as such objects may be associated with the field that is being harvested and may not be indicative of airborne particles in the area 310 proximate the header 200. The controller 352 may receive and/or access the ground speed of the agricultural system 100 via any suitable source or technique (e.g., speed control signals; a drive system for the agricultural system 100). In some embodiments, the controller 352 may determine a speed of the header 200 based on a speed at which stalks in front of the header 200 are approaching. For example, the speed at which the stalks in the field are approaching the header 200 may be indicative of the ground speed of the header 200, such that objects moving through the field of view of the one or more sensors 304 at a similar speed or within some margin of the speed at which the stalks are approaching may be ignored (e.g., filtered, screened). Similarly, because the one or more sensors 304 are mounted to the header 200, objects (e.g., even kernels still attached to the ears of corn on the header 200) in the field of view that have a relative speed of zero or near zero kilometers per hour may be indicative of objects on the header 200, and as such, the controller 352 may filter out such objects. In some embodiments, the velocity (e.g., vector, direction and speed) of a particular object may be indicative of an estimated point of origin of the airborne particle such that an associated row unit may be identified as the point of origin for the particular object. For example, depending on the velocity of an object (e.g., kernel), the controller 352 may be able to determine which row unit 204 the kernel came from.

The one or more sensors 304 may also be configured to detect a size of respective objects captured by the one or more sensors 304. Accordingly, the controller 352 may include instructions associated with filtering out objects that are less than a threshold size and/or greater than a threshold size such that objects having a range of sizes that correspond to an average size of a corn kernel may be recorded. For example, a size of an average corn kernel may be between 10 millimeters (mm) and 20 mm. Accordingly, the controller 352 may filter out objects having sizes that do not fall within the range of 10-20 mm as such objects are likely not associated with airborne kernels. By filtering the data discussed herein, data collected by the one or more sensors 304 may be indicative of a number of airborne particles derived from the crop (e.g., the desirable crop material) in the area 310 proximate the header 200, such that the controller 352 may control one or more operating parameters of the header 200 based on the detected number of airborne particles.

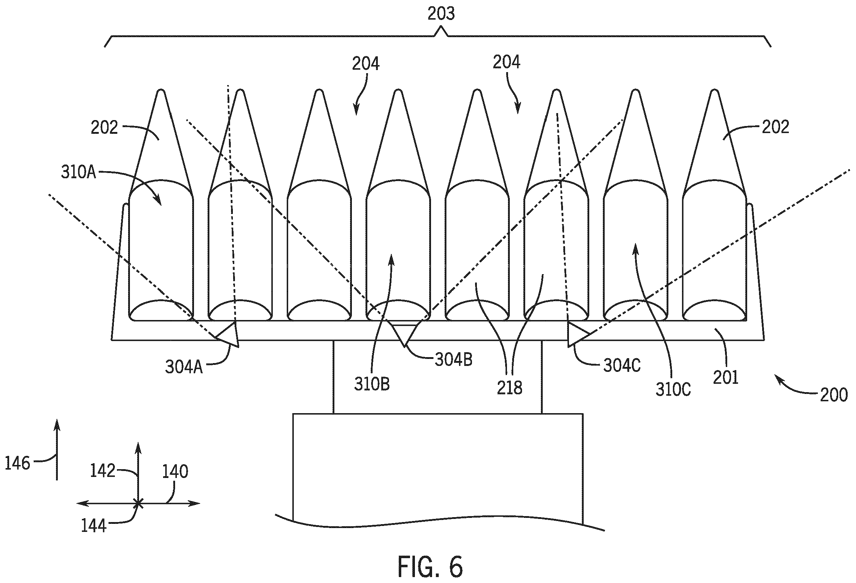

FIG. 6 is a perspective view of an embodiment of the header 200 having multiple sensors 304 of the APSS 300 mounted to the frame 201 of the header 200. As noted above, the APSS 300 may include multiple sensors 304 configured to generate data indicative of a number of airborne particles in the area 310 proximate the header 200 (e.g., capture data indicative of an amount of butt-shelling). As illustrated, each of the sensors 304 may be configured to detect airborne particles in a specific region associated with the header 200. For example, a first sensor 304A may be configured to detect airborne particles in a first region 310A, a second sensor 304B may be configured to detect airborne particles in a second region 310B, and a third sensor 304C may be configured to detect airborne particles in a third region 310C. Similar to the area 310 discussed above, each of the regions 310A, 310B, 310C may correspond to a region that is positioned above the header 200 relative to the vertical axis 144. That is, each of the sensors 304A, 304B, 304C may be oriented parallel to the ground surface 101 such that the sensors 304A, 304B, 304C are not directed toward the header 200. In certain embodiments, the sensors 304A, 304B, 304C may be oriented away from the header 200 at an angle relative to the longitudinal axis 142 such that the sensors 304 detect airborne particles in regions proximate to and above the header 200 (e.g., only above the header 200, the header 200 is outside of the field of view of the sensors 304, which may reduce interference due to a presence of metallic components on the header 200 and/or may reduce processing/filtering steps to identify the airborne particles in the field of view of the one or more sensors 304) relative to the vertical axis 144. Further, as noted above, a respective height of each of the sensors 304 may be adjusted via the arm 306 such that the sensors 304 may detect airborne particles at different heights relative to the vertical axis 144. For example, the sensor 304A may be set at a height 30 centimeters (cm) above the header 200 and oriented parallel with the longitudinal axis 142 and/or away from the header 200 at an angle relative to the longitudinal axis 142, while the sensor 304B may be set at a height 90 centimeters above the header 200. Additionally, in some embodiments, each of the sensors 304A, 304B, 304C may be rotatable about the arm 306 such that the sensors 304A, 304B, 304C may detect airborne particles across the width 203 of the header 200.

In some embodiments, the APSS 300 may include fewer or more sensors 304 (one, two, four, five, or more). For example, in some embodiments, the APSS 300 may include a single sensor 304 configured to detect airborne particles in a specific area proximate the header 200 (e.g., a portion of the width 203 of the header 200; a portion of the area that is expected to have airborne particles due to butt-shelling). The data generated by the single sensor 304 may be extrapolated across the width of the header 200 to determine or to estimate a number of airborne particles in the area 310 proximate the header 200 (e.g., a total number across the width 203 of the header 200), or the data generated by the single sensor 304 may be considered representative and compared to a relevant threshold to determine whether the butt-shelling is acceptable or not. That is, because the header 200 is operated using the same operating parameters across the width 203 of the header 200 (e.g., same speed of stalk rollers 210 for each row unit 204, same width 215 of gap 214 between deck plates 212 for each row unit 204), different areas across the width 203 of the header 200 experience substantially similar (e.g., within 1 percent - 5 percent) amounts of butt-shelling. Accordingly, data from a single sensor 304 associated with a specific row unit 204 or set of row units 204 may be extrapolated to account for additional row units 204 that are not monitored and/or considered separately, thereby enabling a determination or estimation of a total amount of airborne particles in the area 310 proximate the header 200 and/or otherwise enabling monitoring of airborne particles and dynamic adjustments to address butt-shelling during harvesting operations.

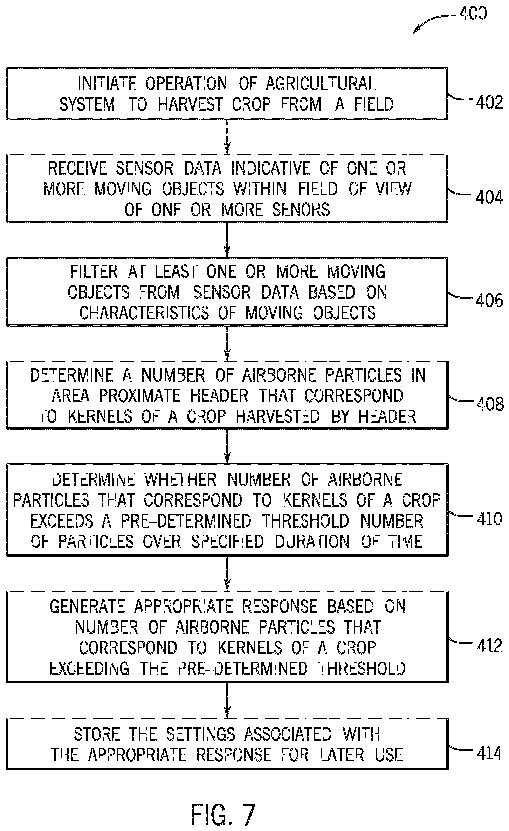

FIG. 7 illustrates a flow chart of an embodiment of a method 400 that may be employed by the control system 350 (e.g., controller 352) to facilitate operation of the header 200 of the agricultural system 100 based on data captured by the one or more sensors 304. Although the following description of the method 400 is described in a particular order, it should be noted that the method 400 is not limited to the depicted order; and instead, the method 400 may be performed in any suitable order. In addition, although the controller 352 is described as performing the method 400, it should be understood that one or more steps of the method 400 may be performed by any suitable computing device and the data may be communicated to the controller 352, thereby enabling the controller 352 to perform the steps described herein.

Referring now to FIG. 7, the controller 352, at block 402, may initiate operation of the agricultural system 100 to harvest crop from a field. For example, the controller 352 may receive an instruction from an operator to initiate operation of the agricultural system 100, thereby enabling the agricultural system 100 to traverse a field and harvest crop using the header 200, as described herein.

As the header 200 harvests crop from the field, the controller 352, at block 404, may receive sensor data from the one or more sensors 304 of the APSS 300. As noted above, the sensor data generated by the one or more sensors 304 may be indicative of one or more moving objects within the field of view of the one or more sensors 304. As discussed herein, the one or more "moving objects" may correspond to particles, kernels of a crop, portions of a crop, moving components of the header 200, components of the field moving within a threshold margin of the ground speed of the agricultural system 100, components of the header 200 moving with a relative speed of zero (relative to the header 200), or any combination thereof. For example, while an approaching crop may be generally stationary as the header 200 approaches during a harvesting operation, the one or more sensors 304 may determine that the approaching crop is a "moving object" approaching the header 200 with a speed substantially similar to the ground speed of the agricultural system 100. In some embodiments, the controller 352 may adjust a height and/or orientation at which the one or more sensors 304 based on data received from one or more of the sensors 304. For example, upon determining that a greater number of airborne particles are detected by a first sensor 304A set at a first height, the controller 352 may adjust the height of other sensors 304B-304N employed by the APSS 300 to match the height of the first sensor 304A, thereby enabling the sensors 304 to detect an increased amount of airborne kernels in the area proximate the header 200.

At block 406, using one or more algorithms (e.g., machine learning and/or artificial intelligence models), the controller 352 may filter out at least one of the one or more of the moving objects detected by the one or more sensors 304 based on certain characteristics of the moving objects. For example, as noted above, the sensors 304 may be configured to capture data associated with one or more moving objects that correspond to kernels of a crop that have been dislodged from a respective portion of a crop (e.g., ear of corn) as a result of engagement with the pair of deck plates 212 and/or impact with the pair of deck plates 212. The controller 352 may include data stored in the memory 356 indicative of an average size of a kernel of a crop, and the controller 352 may be configured to filter out moving objects that are outside a threshold range of sizes that may correspond to a kernel of a crop. For example, a corn kernel may have an average size of 10-20 mm. Accordingly, the controller 352 may be configured to filter out moving objects that have a size less than 10mm or greater than 20mm, as such moving objects likely do not correspond to kernels of a crop.

Further, the controller 352 may be configured to filter out moving objects based on the speed at which the objects are moving through the field of view of the one or more sensors 304. For example, the agricultural system 100 may be operating to harvest crop at a specific ground speed (e.g., 5 kilometers per hour) which may be communicated to the controller 352. As the agricultural system 100 (and thus the header 200) traverses the field to harvest crop, objects moving through the field of view of the one or more sensors 304 at a speed that has less than a threshold deviation (e.g., less than 2 kilometers per hour of deviation) from the ground speed of the agricultural system 100 may correspond to objects within the field (e.g., objects being passed in the field; stalks of corn planted in the field). In contrast, airborne particles corresponding to kernels of a crop may move at significantly higher speeds (e.g., 10-20 kilometers per hour). Accordingly, the controller 352 may filter out the objects moving through the field of view of the one or more sensors 304 at a speed within a threshold deviation of the ground speed of the agricultural system 100 as they likely do not correspond to airborne kernels that have been dislodged from a respective crop. Similarly, the controller 352 may filter out objects having a relative speed of zero or near zero, as these objects may correspond to components of the header 200. In some embodiments, the controller 352 may also filter out certain moving objects based on input data and/or historical data. For example, the controller 352 may be aware that the stalk rollers 210 are rotating at a particular speed. Accordingly, the controller 352 may filter out moving objects that have a speed substantially similar (e.g., less than a threshold amount of deviation) to the speed at which the stalk rollers 210 are rotating, as such data may be associated with the stalk rollers 210, and may not be indicative of airborne kernels that have been dislodged from a respective crop.

Upon filtering the moving objects that do not correspond to airborne kernels of a crop in the area proximate the header 200, the controller 352 may, at block 408, determine a number of airborne particles in the area proximate the header 200 that correspond to kernels of a crop that have been dislodged from a respective crop harvested by the header 200. Subsequently, at block 410, the controller 352 may determine whether the number of airborne particles that correspond to kernels of a crop in the area proximate the header 200 is greater than a threshold number of particles over a time period. For example, a manufacturer or an operator may set the threshold at 100 airborne particles over a 5 minute duration of time. Accordingly, as the header 200 harvests crop from the field, if the controller 352 determines that the number of airborne particles detected that correspond to kernels of a crop is greater than 100 particles over the 5 minute duration of time, the controller 352 may generate an appropriate response, as described in greater detail herein. Further, the machine learning models may record the data generated by the one or more sensors 304 to identify patterns and/or characteristics that facilitate the filtering process. For example, upon determining that certain particles moving at a particular speed and/or having a particular size do not correspond to kernels of a crop, the machine learning models may update such that the controller 352 may filter out such objects in future harvesting operations.

At block 412, in response to determining that the number of airborne particles that correspond to kernels of a crop exceeds the threshold over the time period, the controller 352 may generate an appropriate response to limit an amount of butt-shelling (e.g., limit a number of airborne particles in the area proximate the header 200; reduce or block butt-shelling) during a harvesting operation. In some embodiments, in response to determining that the number of airborne particles that correspond to kernels of a crop exceeds the threshold over the time period, the controller 352 may adjust the width 215 of the gap 214 between the pair of deck plates 212 to decrease the amount of butt-shelling occurring during the harvesting operation. For example, the controller 352 may determine that the width 215 of the gap 214 is such that a portion of the crop having a first diameter may pass through the gap without interference, while a second portion of the crop having a second diameter greater than the first diameter may engage with one or more of the deck plates 212, thereby resulting in undesirable butt-shelling. Accordingly, the controller 352 may determine to decrease the width 215 of the gap 214 such that the width 215 of the gap 214 is less than the first diameter of the crop (e.g., less than the smallest diameter of the crop). In this way, the crop may be prevented or blocked from passing through the deck plates 212 and instead may be caught by the deck plates 212 and directed toward the conveyor 206 for processing with reduced butt-shelling. Similarly, the controller 352 may determine that a threshold amount of stalk is detected in the area 310 proximate the header 200. A threshold amount of stalk detected by the sensors 304 may indicate that the width 215 of the gap 214 is such that both the stalk and the crop are prevented or blocked from passing through the deck plates 212. Accordingly, the controller 352 may adjust the width 215 of the gap 214 (e.g., increase the width 215 of the gap 214) such that the stalk may pass through the gap 214 while the crop is prevented or blocked from passing through the gap 214.

In certain embodiments, the appropriate response may be associated with modifying a speed at which the stalk rollers 210 rotate to direct the stalk and/or other portions of the crop toward the pair of deck plates 212. For example, in response to determining that the number of airborne particles that correspond to kernels of a crop exceeds the threshold over the time period, the controller 352 may decrease the speed at which the stalk rollers 210 rotate. In this way, an impact force between the crop and the pair of deck plates 212 may be decreased, thereby resulting in a decrease of butt-shelling as the crop strikes the pair of deck plates 212 at a reduced speed and/or with a reduced impact force.

At block 414, the controller 352 may store the modified settings associated with the width 215 of the gap 214 and/or the speed of the stalk rollers 210 for later harvesting operations. In some embodiments, the controller 352 may also generate control signals for the header 200 and/or one or more notifications to send to an operator in response to detecting that one or more modified settings result in increased amounts of butt-shelling. For example, after an increase in the speed at which the stalk rollers 210 rotate, the one or more sensors 304 may detect an increased number of airborne particles in the area proximate the header 200. Accordingly, the controller 352 may generate the control signals for the header 200 and/or an alarm configured to alert the operator that the recent change resulted in an increase in butt-shelling. The control signals for the header 200 may return to the previous settings and/or other settings (e.g., based on the settings stored in the memory that are associated with decreased amounts of butt-shelling) and/or the alarm may include a notification with a recommendation to return to the previous settings and/or the other settings. In this way, the controller 352 may provide responsive, dynamic control and/or outputs to limit butt-shelling during harvesting operations. It should be appreciated that in some embodiments, the controller 352 may perform the steps of the method 400 automatically as data is generated by the one or more sensors 304 to limit an amount of butt-shelling occurring on the header 200. For example, in response to determining that a particular set of settings (e.g., rotational speed of the pair of stalk rollers 210, width 215 of the gap 214, ground speed of the agricultural system 100, or any combination thereof) results in an increased amount of butt-shelling, the controller 352 may retrieve previous settings that are associated with decreased amounts of butt-shelling (and stored in the memory 356) to operate the header 200. Further, during operation, the controller 352 may dynamically determine optimal settings to decrease an amount of butt-shelling, and may adjust the operating parameters of the header 200 and/or agricultural system 100 accordingly (e.g., without receiving approval input from an operator), thereby automatically reducing an amount of butt-shelling and increasing yield from a harvesting operation.

While only certain features of the invention have been illustrated and described herein, many modifications and changes will occur to those skilled in the art, which are within the scope of the present invention as defined by the appended claims.

## Claims

1. A header (200) for an agricultural system (100), wherein the header (200) comprises:
a plurality of row units (204) distributed across a width (203) of the header (200);
one or more sensors (304) coupled to the header (200) and oriented such that a field of view (311) of the one or more sensors (304) comprises an area (310) above the header (200) relative to a soil surface (101), and the one or more sensors (304) are configured to generate respective signals indicative of a plurality of objects in the area (310) proximate the header; and
a controller (352) comprising a memory (356) and a processor (354), wherein the controller (352) is configured to:
receive (404) the respective signals from the one or more sensors (304) coupled to the header (200); and
process the respective signals to determine an amount of butt-shelling occurring on the header (200) via:
identifying (404) one or more respective characteristics of the plurality of objects in the area (310) proximate the header;
filtering (406) out a portion of the plurality of objects based on the one or more respective characteristics of the plurality of objects; and
determining a number of airborne particles (254) of a crop (250) in the area (310) proximate the header (200) by counting (408) a remaining portion of the plurality of objects in the area proximate the header after filtering out the portion of the plurality of objects.

2. The header (200) of claim 1, wherein the one or more respective characteristics include a speed of the plurality of objects, a size of the plurality of objects, or a combination thereof.

3. The header (200) of any of claims 1 to 2, wherein each of the plurality of row units (204) comprises a first deck plate (212) and a second deck plate (212), and the first deck plate (212) and the second deck plate (212) are separated from one another by a gap (214) having an adjustable width (215).

4. The header (200) of any of claims 1 to 3, wherein each of the plurality of row units (204) comprises one or more stalk rollers (210) configured to rotate to direct a crop (250) toward the first deck plate (212) and the second deck plate (212).

5. The header (200) of any of claims 1 to 4, wherein the controller (352) is configured to:
determine (410) whether the amount of butt-shelling occurring on the header exceeds a threshold amount over a time period; and
generate (412) an output in response to determining that the amount of butt-shelling exceeds the threshold amount over the time period.

6. The header (200) of any of claims 1 to 5, wherein the output comprises adjusting (412) the adjustable width (215) of the gap (214).

7. The header (200) of any of claims 1 to 5, wherein the output comprises reducing (412) a rotational speed of the one or more stalk rollers (210).

8. The header (200) of any of claims 1 to 7, wherein the one or more sensors (304) are oriented at an angle parallel to the soil surface (101) such that the header (200) is not in the field of view (311) of the one or more sensors (304).

9. The header (200) of any of claims 1 to 7, wherein the one or more sensors (304) are oriented away from the header (200) at an angle relative to a longitudinal axis (142) of the header (200) such that the header (200) is not in the field of view (311) of the one or more sensors (304).

10. The header (200) of any of claims 1 to 9, wherein the one or more sensors (304) are radar sensors.

11. The header (200) of any of claims 1 to 10, wherein each of the one or more sensors (304) are coupled to a frame (201) of the header (200) via a respective arm (306), and each respective arm (306) comprises one or more joints (308) configured to enable adjustment of a height, an orientation, or both of the one or more sensors (304).

12. A method (400) wherein the method (400) comprises:
operating (402) an agricultural system (100) to harvest crop from a field using a header (200);
receiving (404) sensor data from one or more sensors (304) mounted on the header (200), wherein the sensor data is indicative of a plurality of objects within a field of view (311) of the one or more sensors (304), wherein the one or more sensors (304) are oriented airborne such that the header (200) is not in the field of view (311) of the one or more sensors (304);
determining (408) a number of the plurality of objects that correspond to airborne kernels (254) of a crop (250) comprises filtering (406) out at least one object of the plurality of objects based on a size of the at least one object, a speed of the at least one object, or both;
determining (410) whether the number of the plurality of objects that correspond to the airborne kernels (254) of the crop (250) exceeds a threshold number; and
generating (412) an output in response to the number of the plurality of objects that correspond to the airborne kernels of the crop exceeding the threshold number.

13. The method of claim 12, wherein the response comprises decreasing (412) a width (215) of a gap (214) between respective pairs of deck plates (212) associated with the header (200).

## Patentansprüche

1. Schneidwerk (200) für ein landwirtschaftliches System (100), wobei das Schneidwerk (200) umfasst:
eine Vielzahl von Reiheneinheiten (204), die über eine Breite (203) des Schneidwerks (200) verteilt sind;
einen oder mehrere Sensoren (304), die an das Schneidwerk (200) gekoppelt sind und so ausgerichtet sind, dass ein Sichtfeld (311) des einen oder der mehreren Sensoren (304) einen Bereich (310) oberhalb des Schneidwerks (200) relativ zu einer Bodenoberfläche (101) umfasst, und der eine oder die mehreren Sensoren (304) konfiguriert sind, um jeweilige Signale zu erzeugen, die eine Vielzahl von Objekten in dem Bereich (310) in der Nähe des Schneidwerks anzeigen; und
eine Steuerung (352), die einen Speicher (356) und einen Prozessor (354) umfasst, wobei die Steuerung (352) konfiguriert ist zum:
Empfangen (404) der jeweiligen Signale von dem einen oder den mehreren Sensoren (304), die an das Schneidwerk (200) gekoppelt sind; und
Verarbeiten der jeweiligen Signale, um eine Menge an Verlusten am Kolbenansatz zu bestimmen, die an dem Schneidwerk (200) auftreten, über:
Identifizieren (404) einer oder mehrerer jeweiliger Eigenschaften der Vielzahl von Objekten in dem Bereich (310) in der Nähe des Schneidwerks;
Herausfiltern (406) eines Teils der Vielzahl von Objekten basierend auf die eine oder mehreren jeweiligen Eigenschaften der Vielzahl von Objekten und
Bestimmen einer Anzahl von in der Luft befindlichen Partikeln (254) eines Ernteguts (250) in dem Bereich (310) in der Nähe des Schneidwerks (200) durch Zählen (408) eines verbleibenden Teils der Vielzahl von Objekten in dem Bereich in der Nähe des Schneidwerks nach dem Herausfiltern des Teils der Vielzahl von Objekten.

2. Schneidwerk (200) nach Anspruch 1, wobei die eine oder mehreren jeweiligen Eigenschaften eine Geschwindigkeit der Vielzahl von Objekten, eine Größe der Vielzahl von Objekten oder eine Kombination davon einschließen.

3. Schneidwerk (200) nach einem der Ansprüche 1 bis 2, wobei jede der Vielzahl von Reiheneinheiten (204) eine erste Deckplatte (212) und eine zweite Deckplatte (212) umfasst und die erste Deckplatte (212) und die zweite Deckplatte (212) durch einen Spalt (214) mit einer einstellbaren Breite (215) voneinander getrennt sind.

4. Schneidwerk (200) nach einem der Ansprüche 1 bis 3, wobei jede der Vielzahl von Reiheneinheiten (204) eine oder mehrere Halmwalzen (210) umfasst, die konfiguriert sind, um sich zu drehen, um ein Erntegut (250) in Richtung der ersten Deckplatte (212) und der zweiten Deckplatte (212) zu lenken.

5. Schneidwerk (200) nach einem der Ansprüche 1 bis 4, wobei die Steuerung (352) konfiguriert ist zum:
Bestimmen (410), ob die Menge der Verluste am Kolbenansatz, die am Schneidwerk auftritt, einen Schwellenwert über eine Zeitspanne überschreitet; und
Erzeugen (412) einer Ausgabe als Reaktion auf die Bestimmung, dass die Menge der Verluste am Kolbenansatz den Schwellenwert über die Zeitspanne überschreitet.

6. Schneidwerk (200) nach einem der Ansprüche 1 bis 5, wobei die Ausgabe das Einstellen (412) der einstellbaren Breite (215) des Spalts (214) umfasst.

7. Schneidwerk (200) nach einem der Ansprüche 1 bis 5, wobei die Ausgabe das Reduzieren (412) einer Drehzahl der einen oder mehreren Halmwalzen (210) umfasst.

8. Schneidwerk (200) nach einem der Ansprüche 1 bis 7, wobei der eine oder die mehreren Sensoren (304) in einem Winkel parallel zu der Bodenoberfläche (101) ausgerichtet sind, sodass sich das Schneidwerk (200) nicht im Sichtfeld (311) des einen oder der mehreren Sensoren (304) befindet.

9. Schneidwerk (200) nach einem der Ansprüche 1 bis 7, wobei der eine oder die mehreren Sensoren (304) vom Schneidwerk (200) weg in einem Winkel relativ zu einer Längsachse (142) des Schneidwerks (200) ausgerichtet sind, sodass sich das Schneidwerk (200) nicht im Sichtfeld (311) des einen oder der mehreren Sensoren (304) befindet.

10. Schneidwerk (200) nach einem der Ansprüche 1 bis 9, wobei der eine oder die mehreren Sensoren (304) Radarsensoren sind.

11. Schneidwerk (200) nach einem der Ansprüche 1 bis 10, wobei jeder des einen oder der mehreren Sensoren (304) über einen jeweiligen Arm (306) an einen Rahmen (201) des Schneidwerks (200) gekoppelt ist und jeder jeweilige Arm (306) ein oder mehrere Gelenke (308) umfasst, die konfiguriert sind, um eine Einstellung einer Höhe, einer Ausrichtung oder beiden des einen oder der mehreren Sensoren (304) zu ermöglichen.

12. Verfahren (400), wobei das Verfahren (400) umfasst:
Betreiben (402) eines landwirtschaftlichen Systems (100) zum Ernten von Erntegut von einem Feld unter Verwendung eines Schneidwerks (200);
Empfangen (404) von Sensordaten von einem oder mehreren Sensoren (304), die an dem Schneidwerk (200) montiert sind, wobei die Sensordaten eine Vielzahl von Objekten innerhalb eines Sichtfelds (311) des einen oder der mehreren Sensoren (304) anzeigen, wobei der eine oder die mehreren Sensoren (304) luftwärts ausgerichtet sind, sodass sich das Schneidwerk (200) nicht im Sichtfeld (311) des einen oder der mehreren Sensoren (304) befindet;
Bestimmen (408) einer Anzahl der Vielzahl von Objekten, die in der Luft befindliche Körner (254) eines Ernteguts (250) entsprechen, umfasst Herausfiltern (406) mindestens eines Objekts der Vielzahl von Objekten basierend auf einer Größe des mindestens einen Objekts, einer Geschwindigkeit des mindestens einen Objekts oder beidem;
Bestimmen (410), ob die Anzahl der Vielzahl von Objekten, die den in der Luft befindlichen Körnern (254) des Ernteguts (250) entsprechen, eine Schwellenwertanzahl überschreitet; und
Erzeugen (412) einer Ausgabe als Reaktion darauf, dass die Anzahl der Vielzahl von Objekten, die den in der Luft befindlichen Körnern des Ernteguts entsprechen, die Schwellenwertanzahl überschreitet.

13. Verfahren nach Anspruch 12, wobei die Reaktion das Verringern (412) einer Breite (215) eines Spalts (214) zwischen jeweiligen Paaren von Deckplatten (212), die mit dem Schneidwerk (200) verbunden sind, umfasst.

## Revendications

1. Unité de récolte (200) pour un système agricole (100), dans laquelle l'unité de récolte (200) comprend :
une pluralité d'unités de rangée (204) réparties sur l'ensemble d'une largeur (203) de l'unité de récolte (200) ;
un ou plusieurs capteurs (304) couplés à l'unité de récolte (200) et orientés de telle sorte qu'un champ de vision (311) du ou des capteurs (304) comprend une zone (310) au-dessus de l'unité de récolte (200) par rapport à une surface de sol (101), et le ou les capteurs (304) sont configurés pour générer des signaux respectifs indiquant une pluralité d'objets dans la zone (310) à proximité de l'unité de récolte ; et
un dispositif de commande (352) comprenant une mémoire (356) et un processeur (354), dans laquelle le dispositif de commande (352) est configuré pour :
recevoir (404) les signaux respectifs en provenance du ou des capteurs (304) couplés à l'unité de récolte (200) ; et
traiter les signaux respectifs pour déterminer une quantité d'éclatement à la base se produisant sur l'unité de récolte (200) par :
l'identification (404) d'une ou plusieurs caractéristiques respectives de la pluralité d'objets dans la zone (310) à proximité de l'unité de récolte ;
le filtrage (406) d'une partie de la pluralité d'objets sur la base de la ou des caractéristiques respectives de la pluralité d'objets ; et
la détermination d'un nombre de particules en suspension dans l'air (254) d'une culture (250) dans la zone (310) à proximité de l'unité de récolte (200) en comptant (408) une partie restante de la pluralité d'objets dans la zone à proximité de l'unité de récolte après avoir filtré la partie de la pluralité d'objets.

2. Unité de récolte (200) selon la revendication 1, dans laquelle la ou les caractéristiques respectives comportent une vitesse de la pluralité d'objets, une taille de la pluralité d'objets, ou une combinaison de celles-ci.

3. Unité de récolte (200) selon l'une quelconque des revendications 1 à 2, dans laquelle chacune parmi la pluralité d'unités de rangée (204) comprend une première plaque d'écartement (212) et une seconde plaque d'écartement (212), et la première plaque d'écartement (212) et la seconde plaque d'écartement (212) sont séparées l'une de l'autre par un espace (214) ayant une largeur ajustable (215).

4. Unité de récolte (200) selon l'une quelconque des revendications 1 à 3, dans laquelle chacune parmi la pluralité d'unités de rangée (204) comprend un ou plusieurs rouleaux d'entraînement de tiges (210) conçus pour tourner afin de diriger une culture (250) vers la première plaque d'écartement (212) et la seconde plaque d'écartement (212).

5. Unité de récolte (200) selon l'une quelconque des revendications 1 à 4, dans laquelle le dispositif de commande (352) est configuré pour :
déterminer (410) si la quantité d'éclatement à la base se produisant sur l'unité de récolte dépasse une quantité seuil pendant une certaine période ; et
générer (412) une sortie en réponse au fait de déterminer que la quantité d'éclatement à la base dépasse la quantité seuil pendant la période.

6. Unité de récolte (200) selon l'une quelconque des revendications 1 à 5, dans laquelle la sortie comprend l'ajustement (412) de la largeur ajustable (215) de l'espace (214).

7. Unité de récolte (200) selon l'une quelconque des revendications 1 à 5, dans laquelle la sortie comprend la réduction (412) d'une vitesse de rotation du ou des rouleaux d'entraînement de tiges (210).

8. Unité de récolte (200) selon l'une quelconque des revendications 1 à 7, dans laquelle le ou les capteurs (304) sont orientés selon un angle parallèle à la surface de sol (101) de telle sorte que l'unité de récolte (200) ne se trouve pas dans le champ de vision (311) du ou des capteurs (304).

9. Unité de récolte (200) selon l'une quelconque des revendications 1 à 7, dans laquelle le ou les capteurs (304) sont orientés à l'écart de l'unité de récolte (200) selon un angle par rapport à un axe longitudinal (142) de l'unité de récolte (200) de telle sorte que l'unité de récolte (200) ne se trouve pas dans le champ de vision (311) du ou des capteurs (304).

10. Unité de récolte (200) selon l'une quelconque des revendications 1 à 9, dans laquelle le ou les capteurs (304) sont des capteurs radar.

11. Unité de récolte (200) selon l'une quelconque des revendications 1 à 10, dans laquelle chacun du ou des capteurs (304) est accouplé à un cadre (201) de l'unité de récolte (200) par l'intermédiaire d'un bras respectif (306), et chaque bras respectif (306) comprend une ou plusieurs articulations (308) conçues pour permettre un ajustement d'une hauteur, d'une orientation, ou des deux du ou des capteurs (304).

12. Procédé (400), dans lequel le procédé (400) comprend :
le fonctionnement (402) d'un système agricole (100) pour récolter une culture dans un champ à l'aide d'une unité de récolte (200) ;
la réception (404) de données de capteur en provenance d'un ou plusieurs capteurs (304) montés sur l'unité de récolte (200), dans lequel les données de capteur indiquent une pluralité d'objets dans un champ de vision (311) du ou des capteurs (304), dans lequel le ou les capteurs (304) sont orientés en suspension dans l'air de telle sorte que l'unité de capteur (200) ne se trouve pas dans le champ de vision (311) du ou des capteurs (304) ;
la détermination (408) d'un nombre de la pluralité d'objets qui correspondent à des grains en suspension dans l'air (254) d'une culture (250) comprend le filtrage (406) d'au moins un objet de la pluralité d'objets sur la base d'une taille de l'au moins un objet, d'une vitesse de l'au moins un objet, ou des deux ;
le fait de déterminer (410) si le nombre de la pluralité d'objets qui correspondent aux grains en suspension dans l'air (254) de la culture (250) dépasse un nombre seuil ; et
la génération (412) d'une sortie en réponse au nombre de la pluralité d'objets qui correspondent aux grains en suspension dans l'air de la culture dépassant le nombre seuil.

13. Procédé selon la revendication 12, dans lequel la réponse comprend la diminution (412) d'une largeur (215) d'un espace (214) entre des paires respectives de plaques d'écartement (212) associées à l'unité de récolte (200).
